# EUROPÄISCHE PATENTSCHRIFT

(11) **EP 3 009 833 B1**
(45) Veröffentlichungstag und Bekanntmachung des Hinweises auf die Patenterteilung: **02.12.2020**
(21) Anmeldenummer: 14003513.0
(22) Anmeldetag: 14.10.2014
(51) Int. Cl.: G01N 21/88, G01N 21/95

(54) **In-Prozess Fehlerüberprüfung durch erweiterte Realität**
In-process error checking by means of augmented reality
Vérification d'erreur en cours par réalité augmentée

(43) Veröffentlichungstag der Anmeldung: 20.04.2016
(73) Patentinhaber: AIRBUS DEFENCE AND SPACE GMBH, 82024 Taufkirchen (DE)
(72) Erfinder: Engel, Franz, 81539 München (DE)

(56) Entgegenhaltungen:
- EP-A2- 1 810 816
- DE-A1-102005 025 470
- DE-A1-102009 008 039

## Beschreibung

Die Erfindung betrifft eine Anordnung zur optischen Fehlerüberprüfung von mindestens einem Bauteil, insbesondere eines Flugzeuges, während des Herstellungsprozesses des Bauteils. Außerdem betrifft die Erfindung ein entsprechendes Verfahren zur optischen Fehlerüberprüfung des Bauteils.

In der Luftfahrtfertigung werden nach wie vor noch sehr viele Arbeiten manuell durch entsprechend qualifiziertes Personal durchgeführt. Insbesondere bei Faserverbundbauweise stellt dies ein Problem dar, da Faserverbundmaterialien wie kohlenstofffaserverstärkte Kunststoffe / Carbon Fiber Reinforced Plastics (CFK / CFRP) an sich sehr teuer sind und durch die Handarbeit die Fertigungskosten zusätzlich steigen. Hierdurch werden aus technologischer Sicht vorteilhafte Einsatzbereiche von Faserverbundwerkstoffen verhindert bzw. zumindest reduziert.

Die AFP-Technologie (automated fiber placement) löst dieses Problem durch den Einsatz eines vollautomatisierten Fertigungsprozesses für Composite-Bauteile. Hierbei werden robotergeführte faserverstärkte Kunststoffbänder unter Anwendung von Druck und Temperatur entlang eines vorgegebenen Pfads auf einer dreidimensionalen Werkzeugoberfläche abgelegt. Bei dieser Technologie wird das Bauteil aus Kohlenstofffaserbändchen, Bändchen für Bändchen, d.h. Schicht für Schicht, aufgebaut. Die übliche Vorgehensweise zur Prüfung der Qualität ist, dass nach jeder Schicht ein Mitarbeiter das Bauteil auf Qualitätsunterschreitungen hin untersucht. Lageabweichungen der Bändchen sind unbedingt zu vermeiden, auch wenn diese nur wenige Millimeter, beispielsweise 2mm betragen. Außerdem kann es beim Ablegen zu verschiedenen Fehlerbilder kommen, z.B. zu großer Abstand zwischen Bändchen, sich überlappende Bändchen, verdrehte Bändchen, ausgerissene oder abgerissene Bändchen, zusammengefügte Bändchen (Splice), usw.. Bei großen Bauteilen ist damit die Prüfung extrem aufwendig und fehleranfällig. Da CFK an sich ein schwarzer Werkstoff ist, sind vorhandene Lücken, die einem Defekt entsprechen, sehr schwer zu bestimmen bzw. auszumachen.

Aus dem Stand der Technik ist die Umsetzung eines automatisierten Qualitätssicherungssystems (QSS) bekannt, welches Produktionsfehler während des AFP-Herstellungspozesses von CFK Bauteilen feststellt. Das Patent US 8,668,793 beschreibt beispielsweise eine In-Prozess-Fehlererkennung durch ein optisches Kamera-System und die Fehleranzeige durch einen Laserprojektor. Damit werden die Mängel während des Herstellungsprozesses erkannt und aufgezeichnet. Jedoch muss der Mitarbeiter die aufgezeichneten Fehler anschließend noch selbst kontrollieren und ggf. einen Experten wie einen Strukturlastfachmann hinzuziehen, um die Auswirkungen des Defekts zu bewerten. Auch aus der EP 1 810 816 A2 ist die visuelle Anzeige von möglichen Fehlern direkt auf dem Werkstück mittels Lasern bekannt. Aspekte der erweiterten Realität (augmented reality) werden in der Druckschrift DE 10 2005 025 470 A1 diskutiert.

Es ist daher die Aufgabe der Erfindung, eine Anordnung und ein Verfahren anzugeben, welche das bzw. die obengenannten Probleme zumindest verringern.

Diese Aufgabe wird gelöst durch eine Anordnung mit den Merkmalen des Anspruchs 1 und durch ein Verfahren mit den Merkmalen des Anspruchs 11. Zweckmäßige Fortbildungen des Erfindungsgedankens sind Gegenstand der abhängigen Ansprüche.

Die erfindungsgemäße Anordnung weist eine Fehlererkennungseinheit zur Erkennung eines strukturellen Fehlers des Bauteils und zur Bestimmung mindestens einer Fehlerinformation, und ein zur Fehlererkennungseinheit gekoppeltes Mittel zur kontextabhängigen Einblendung der Fehlerinformation auf einem Bauteilbild in Echtzeit auf.

Hierbei entspricht das Mittel zur kontextabhängigen Einblendung der Fehlerinformation auf einem Bauteilbild in Echtzeit einem Erweiterten-Realitäts-System, welches die optische Sichtprüfung des Bauteils ergänzt. Durch die Verwendung dieses Mittels kann der Benutzer der Anordnung die strukturellen Defekte und die Fehlerinformationen direkt und einfach erkennen.

Ein Vorteil der erfindungsgemäßen Lösung besteht darin, dass die Anordnung eine klarere Übersicht des Bauteils schafft, wobei dieses Bauteilbild mit zusätzlichen Informationen versehen ist und eine schnellere und präzisere Inspektion ermöglicht.

Die erfindungsgemäße Anordnung ist zur optischen Fehlerüberprüfung von einem Flugzeugbauteil während des Herstellungsprozesses geeignet, wobei das zu untersuchende Bauteil vorteilhaft aus kohlenfaserverstärktem Kunststoff (CFK) besteht. Hierbei weist die Fehlererkennungseinheit mindestens ein Sensormodul auf, welches während des Herstellungsprozesses des Bauteils das Vorhandensein von Defekten bei benachbarten Kohlenstofffaserbändchen erkennen bzw. die Größe der Defekte bestimmen oder die Anzahl der Kohlenstofffaserbändchen angeben kann. Die Fehlererkennungseinheit kann beispielsweise Teil eines Qualitätssicherungssystems sein. Der strukturelle Defekt entspricht hierbei einer zwischen den Kohlenstofffaserbändchen angeordneten Lücke bzw. einer Spalte bzw. einem Riss oder ähnlichem.

Das Mittel zur kontextabhängigen Einblendung der Fehlerinformation auf einem Bauteilbild in Echtzeit weist insbesondere eine Positionsbestimmungseinheit zur Bestimmung einer exakten Information über die Position des Bauteils und die Position des Benutzers auf. Ferner weist das Mittel eine zur Fehlererkennungseinheit und zur Positionsbestimmungseinheit gekoppelte Prozessoreinheit zur Verarbeitung der von der Fehlererkennungseinheit und Positionsbestimmungseinheit ermittelten Informationen und zur Integrierung der verarbeiteten Informationen in einem Bauteilbild und eine zur Prozessoreinheit gekoppelte Visualisierungseinheit zum Anzeigen des Bauteilbildes mit den integrierten Informationen auf.

Die verschiedenen Einheiten der erfindungsgemäßen Anordnung, also die Fehlererkennungseinheit, die Positionsbestimmungseinheit, die Prozessoreinheit und die Visualisierungseinheit, können durch Kabel oder (komplett oder teilweise) kabellos miteinander gekoppelt werden. Somit können die Daten bzw. die Informationen wireless übertragen werden. Es ist außerdem denkbar, einige dieser Einheiten in anderen Einheiten zu integrieren. Die Prozessoreinheit kann beispielsweise in die Visualisierungseinheit integriert werden und einem tragbaren optischen Hilfsmittel entsprechen.

Die Positionsbestimmungseinheit oder das Tracking-System wird hierbei verwendet, um die exakte Lage und Position des Bauteils zu erfassen. Somit können die ermittelten Fehlerinformationen auf das Bauteil in Echtzeit überlappt und durch Hilfe der Visualisierungseinheit dem Benutzer erkennbar gemacht werden. Die Positionsbestimmungseinheit kann auf optischer Basis arbeiten. In diesem Falle werden optischen Kameras zur Erfassung der Umgebung eingesetzt, wobei die Orientierung mit Hilfe von Landmarken erfolgt. Die Landmarken können dabei natürliche Beschaffenheiten wie z.B. Nasenspitze oder Augenwinkel oder aber auch künstlich sein. Künstliche Landmarken können LEDs, die in regelmäßigen Abständen blinken oder batteriebetriebene Marker, die keine Verkabelung besitzen, aufweisen.

Alternativ kann sich das System auf dem Bauteil selbst orten in dem Bauteilmerkmale, die beispielsweise mit einer tragbaren Kamera erkannt werden, mit den Soll-Daten verglichen werden.

Die Orientierung kann auch durch elektromagnetische oder Ultraschall-Signale oder mechanische Elemente erfolgen.

Die Visualisierungseinheit entspricht hierbei einem optischen Hilfsmittel für den Benutzer, welches die Bauteilprüfung erheblich beschleunigt. Somit muss der Benutzer den von der Fehlererkennungseinheit erkannten Fehler bzw. Defekt nicht mehr auf dem Bauteil ausfindig machen, da sämtliche und notwendigen Fehlerinformationen in dem durch die Visualisierungseinheit angezeigten Bauteilbild in Echtzeit zur Verfügung stehen. Ferner wird die Information über die Bauteilposition mit dem Bauteilbild integriert, wodurch der Benutzer sehr schnell den strukturellen Fehler positionsrichtig auf dem Bauteil herausfinden kann.

In einer Ausführungsform der Erfindung weist die Anordnung bzw. das Mittel zur kontextabhängigen Einblendung der Fehlerinformation auf einem Bauteilbild in Echtzeit eine Aufnahmeeinheit zur Aufnahme des Bauteilbildes auf. Diese kann eine Fotokamera oder eine Videokamera sein, die von der Visualisierungseinheit getrennt oder mit dieser integriert werden kann.

Die Anordnung kann über die Aufnahmeeinheit das reale Bauteil aufnehmen, durch die Prozessoreinheit das Bild verarbeiten, um zum Beispiel die strukturellen Fehler durch eine veränderte Größe bzw. farblich herauszustellen, und durch die Visualisierungseinheit dem Benutzer das veränderte, jedoch fotorealistische, Bild anzeigen.

Alternativ kann die Anordnung ein rein computergeneriertes virtuelles Bauteilbild verwenden, wobei die entsprechenden Kennzeichnungen der Fehler an der richtigen Position im Bauteilbild angezeigt werden.

In diesem Zusammenhang kann der Benutzer in einem freien Raum ein virtuelles Bauteil (in seiner originalen Größe) ablaufen, wobei das Bauteil unter Umständen rein virtuell sein oder mit Fotos bzw. optischen gescannten Bildern des originalen Bauteils überzogen werden kann. Somit kann der Benutzer ohne Gefahr das Bauteil inspizieren, noch während die Maschine in Betrieb ist. Hierdurch kann zum Beispiel ein Inspektor Anweisungen zu Reparaturen sicher treffen und eine zweite Maschine eingesetzt werden, welche den Schaden des Bauteils noch während des Herstellungsprozesses repariert.

In einer besonderen Ausführungsform der Erfindung kann die Aufnahmeeinheit eine Kamera-Onboard sein, wobei das Bild einem Echtzeitbild des Bauteils entspricht.

In einer Ausführungsform der Erfindung weist die Visualisierungseinheit einen tragbaren Rechner, wie z.B. ein Smartphone oder ein Tablet, auf, welches direkt auf das zu untersuchende Bauteil gerichtet werden kann. In einer alternativen Ausführungsform der Erfindung weist die Visualisierungseinheit ein Head-Mounted-Display, wie z.B. eine tragbare Brille oder ein Helm-Display, auf. Es ist auch denkbar, Kontaktlinsen bzw. bionische Kontaktlinsen bzw. Implantate bzw. gezielte Anregung von Gehirnpartien bzw. des Sehnervs (zur Erzeugung von Bildern im Kopf) zu verwenden, die ein eingebautes Anzeigeelement mit einer integrierten Schaltung, LEDs und einer Antenne zur drahtlos Kommunikation aufweisen. In einer weiteren alternativen Ausführungsform der Erfindung weist die Visualisierungseinheit einen optischen Projektor oder einen tragbaren Bildschirm oder ein tragbares transparentes Display auf.

Es ist noch denkbar, ein Display mit mindestens einer Kamera zu verwendet, um die reelle Welt festzuhalten und eine erweiterte Sicht dieser Welt durch das Display wieder darzustellen, wobei ein Bild mit integrierten erweiterten Informationen durch das Display projiziert bzw. auf dem Display reflektiert wird.

In einer Ausführungsform der Erfindung weist die Fehlerinformation die Ortsbestimmung bzw. die Koordinaten des strukturellen Fehlers auf. Somit kann der Fehler bzw. der Defekt im Bauteil sofort oder im Nachhinein einfach lokalisiert werden.

Alternativ oder ergänzend dazu kann die Fehlerinformation die Schwere des strukturellen Fehlers aufweisen. Somit ist es dem Benutzer möglich, einen Fehler als unkritisch, als kritisch, als nicht reparable usw. zu kennzeichnen und ggf. entsprechende Maßnahmen durch die Anordnung in die Wege zu leiten.

Die Visualisierungseinheit kann ein Touchscreen-Display aufweisen, so dass der Benutzer beim Berühren des Bildschirmes bestimmte Funktionen aktivieren kann. Es ist zum Beispiel denkbar, ein auf dem Display angezeigten Fehler bzw. Ikone zu berühren, um eine zu erledigende Reparatur dem entsprechenden Techniker zuzuweisen oder einfach nur ein Telefongespräch mit dem Techniker zu ermöglichen.

In einer weiteren Ausführungsform der Erfindung, weist die Positionsbestimmungseinheit Referenzmarker zur Berechnung der Bauteilposition auf. Damit kann sich die Anordnung bzgl. der Position zum Bauteil finden. Die Bauteilposition kann hierbei auch über ein externes Signal, wie z.B. ein GPS-Signal, oder über eine Positionsmesseinrichtung bestimmt werden.

Um die Bewegung der Visualisierungseinheit bzw. die Blickrichtung der Visualisierungseinheit mit dem angezeigten Bauteilbild abzustimmen, kann die Prozessoreinheit eine Synchronisierungseinheit aufweisen. In anderen Worten, wenn der Benutzer die erfindungsgemäße Anordnung auf das Bauteil richtet, bewegt sich das Bauteilbild entsprechend der Bewegung und der Blickrichtung der Visualisierungseinheit mit. Im Bauteilbild werden die strukturellen Fehler und die entsprechenden Fehlerinformationen dargestellt. Der Benutzer kann sich somit dem Bauteil nähern, es ablaufen, wobei er bei jedem Blick auf das Bauteil positionsrichtig die vorher gemessenen bzw. erkannten Fehler angezeigt bekommt. Die Suche nach den einzelnen Bauteilfehlern wird dadurch deutlich beschleunigt.

In einer noch weiteren Ausführungsform der Erfindung weist die Visualisierungseinheit ein Mittel zur Ortsbestimmung der strukturellen Fehler auf dem angezeigten Bauteilbild auf. Somit kann die Anordnung den Benutzer durch virtuelle Pfeile, wie dies bei einem Navigationsgerät der Fall ist, an die entsprechenden Fehlerstellen führen.

Das erfindungsgemäße Verfahren zur optischen Fehlerüberprüfung von einem Bauteil weist das Erkennen eines strukturellen Fehlers auf dem Bauteil sowie das Bestimmen mindestens einer Fehlerinformation durch eine Fehlererkennungseinheit und die kontextabhängige Einblendung der Fehlerinformation auf einem Bauteilbild in Echtzeit auf.

Das Verfahren kann hierbei als Erweiterung einer geplanten Fehlerüberprüfung eines Bauteils eingesetzt werden. Der Benutzer geht ohne Hinweis auf mögliche Defekte zum Bauteil und erhält mit dem erfindungsgemäßen Verfahren Informationen zu dem aktuell betrachteten Bauteilbild, wie z.B. die genaue Position einer Lücke oder die Größe dieser Lücke.

Im Besonderen weist der Verfahrensschritt der kontextabhängigen Einblendung der Fehlerinformation auf einem Bauteilbild in Echtzeit, das Bestimmen einer exakten Information über die Position des Bauteils und die Position des Benutzers durch eine Positionsbestimmungseinheit auf. Ferner weist das Verfahren das Verarbeiten der Fehlerinformation und der Information über die Position des Bauteils und die Position des Benutzers sowie das Integrieren der verarbeiteten Informationen in einem Bauteilbild durch eine Prozessoreinheit und das Anzeigen des Bauteilbildes mit den integrierten Informationen durch eine Visualisierungseinheit auf.

In einer Ausführungsform der Erfindung kann das Bild durch eine Aufnahmeeinheit und im Besonderen in Echtzeit aufgenommen werden.

In einer weiteren Ausführungsform der Erfindung bewegt sich das angezeigte Bauteilbild entsprechend der Bewegung der Visualisierungseinheit bzw. der Blickrichtung der Visualisierungseinheit mit.

In einer anderen Ausführungsform der Erfindung weist die Verarbeitung der Fehlerinformation das Kategorisieren des strukturellen Fehlers und gegebenenfalls das Einleiten von Gegenmaßnahmen auf. Somit kann der Benutzer direkt am Ort der Messung die Bewertung der Fehlstelle und ggf. Gegenmaßnahmen ausführen. Außerdem kann die Fehlerposition gespeichert werden.

Durch dieses Verfahren kann der Benutzer zum strukturellen Fehler bzw. zum Defekt direkt und einfach geführt werden, sowohl bei nahen aber sehr kleinen und daher nicht sichtbaren Fehlern als auch bei großer Entfernung zum Bauteil selbst.

Das erfindungsgemäße Verfahren ermöglicht außerdem das Anzeigen zusätzlicher Informationen, wie z.B. über Defekte in unterliegenden Schichten, über die Maßgröße des Fehlers, sowie das Kategorisieren des Fehlers und das Einleiten von Gegenmaßnahmen vor Ort.

Vorteile und Zweckmäßigkeiten der Erfindung ergeben sich im Übrigen aus der nachfolgenden Beschreibung ausgewählter Ausführungsbeispiele anhand der Figuren. Von diesen zeigen:
- Fig.1: eine schematische Darstellung der Anordnung gemäß einer Ausführungsform der Erfindung,
- Fig.2: eine schematische Darstellung der Visualisierungseinheit gemäß einer Ausführungsform der Erfindung, und
- Fig. 3: ein Flussdiagramm des Verfahrens gemäß einer Ausführungsform der Erfindung.

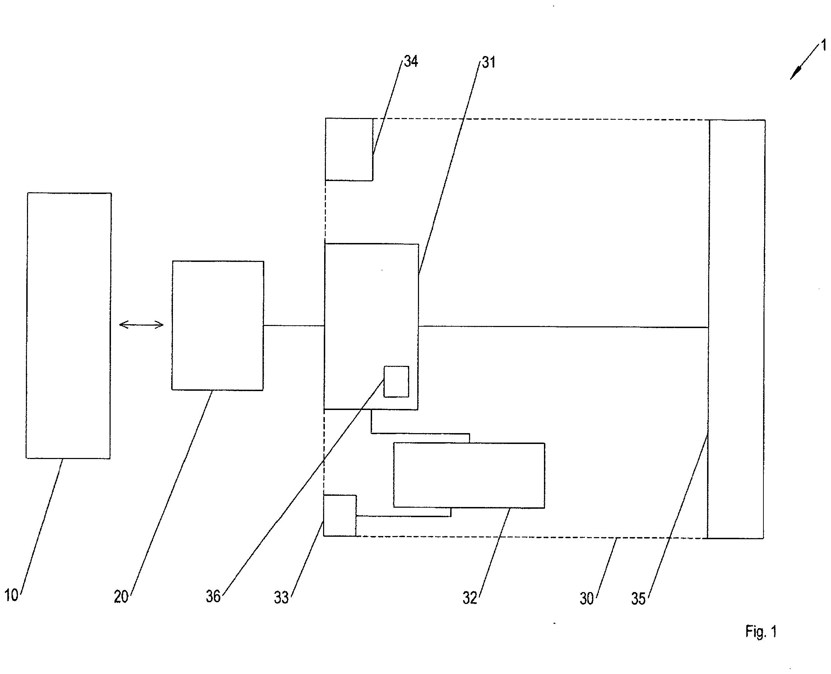

Die Figur 1 beschreibt eine Anordnung 1 zur optischen Fehlerüberprüfung eines Bauteils 10, insbesondere eines Flugzeuges. Die Anordnung 1 weist eine Fehlererkennungseinheit 20, welche die Oberfläche des Bauteils 10 optisch untersucht, um strukturelle Fehler aufzufinden. Das Bauteil 10 weist Kohlenstofffaserbändchen auf, wobei die Fehlererkennungseinheit 20 eine Fehlerüberprüfung während des AFP-Herstellungsprozesses des Bauteils 10 durchführt Die Fehlererkennungseinheit 20 sammelt die Fehlerinformationen (Position und Maßgröße des Defekts) und überträgt diese Informationen zu einem Mittel 30 zur kontextabhängigen Einblendung der Fehlerinformation auf einem Bauteilbild B in Echtzeit. Das Mittel 30 weist eine Prozessoreinheit 31 und eine zur Prozessoreinheit 31 gekoppelte Positionsbestimmungseinheit 32 auf, die durch die Verwendung von geeigneten Referenzmarker 33 die exakte Position des Bauteils 10 und des Benutzers bestimmt. Die Prozessoreinheit 31 verarbeitet die Fehlerinformationen und die von der Positionsbestimmungseinheit 32 ermittelten Informationen und integriert diese in einem Bauteilbild B. Das Bild wird hierbei durch eine zur Prozessoreinheit 31 gekoppelte Aufnahmeeinheit 34 aufgenommen. Das verarbeite Bauteilbild B wird dann von der Prozessoreinheit 31 zu einer Visualisierungseinheit 35 übertragen und somit dem Benutzer angezeigt. Die Prozessoreinheit 31 hat ferner eine Synchronisierungseinheit 36, um die Bewegung der Visualisierungseinheit 35 bzw. die Blickrichtung der Visualisierungseinheit 35 mit dem angezeigten Bauteilbild B abstimmen zu können.

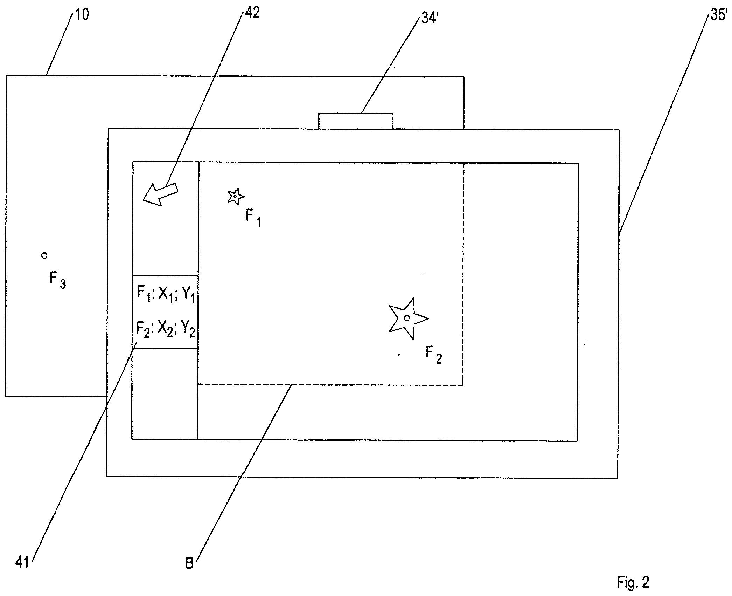

Die Figur 2 beschreibt eine Visualisierungseinheit gemäß einer Ausführungsform der Erfindung. Hierbei entspricht die Visualisierungseinheit einem transparenten tragbaren Display 35' mit einer integrierten Kamera 34', welches mit einer Prozessoreinheit 31 (in der Figur 2 nicht dargestellt) drahtlos kommuniziert. Das transparente Display 35' ist auf dem Bauteil 10 gerichtet und zeigt ein verarbeitetes Bild B des Bauteils 10 in Echtzeit, in dem Fehlerinformationen 41 über erkannte und angezeigte Fehler F₁, F₂ dargestellt werden. Die Fehlerinformationen 41 werden von einer Fehlererkennungseinheit 20 (in der Figur 2 nicht dargestellt) erfasst, von einer Prozessoreinheit 31 verarbeitet und zum Display 35' wireless übertragen. Diese Informationen 41 entsprechen insbesondere den Koordinaten X₁, Y₁; X₂, Y₂ der angezeigten Fehler F₁, F₂. Darüber hinaus weist das Display 35' ein Mittel 42 zur Ortsbestimmung eines Fehlers F₃ auf, wobei der Fehler F₃ nicht auf dem Display 35' angezeigt wird. Dieses Mittel wird durch einen Pfeil 42 dargestellt, um den Benutzer über die Position eines zusätzlichen im Display 35' nicht angezeigten Fehlers F₃ zu informieren bzw. zu diesem Fehler F₃ hinzuführen. Die auf dem Display 35' angezeigten Fehler F₁, F₂ werden außerdem durch ein Zeichen (Stern) mit unterschiedlichen Größen dargestellt. Die Größe des Zeichens entspricht hierbei der Schwere des Fehlers F₁, F₂, wie z.B. die Maßgröße einer Lücke: Je größer das Zeichen ist, desto größer bzw. schwerer der Defekt.

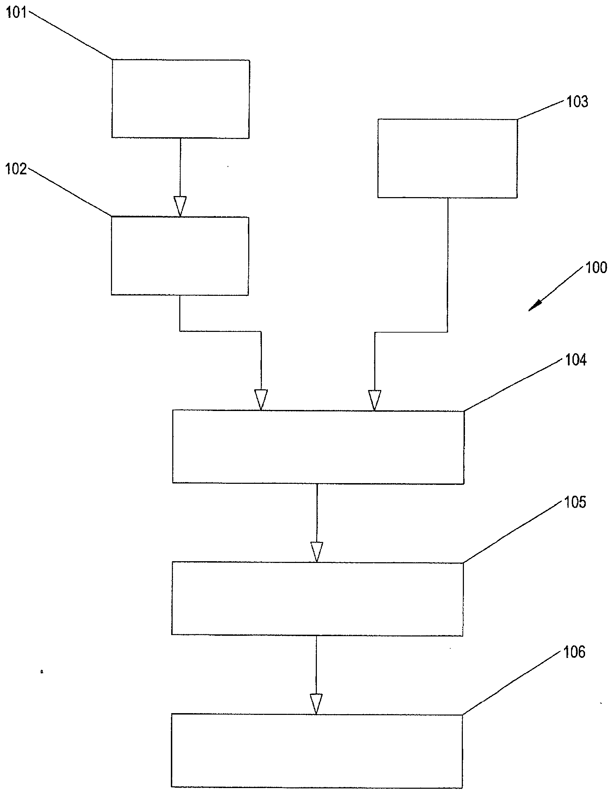

Die Figur 3 beschreibt das Verfahren 100 zur optischen Fehlerüberprüfung von einem Bauteil 10 eines Flugzeuges während des Herstellungsprozesses, wobei das zu untersuchende Bauteil 10 aus kohlefaserverstärktem Kunststoff besteht. Als erster Schritt 101 wird die Oberfläche des Bauteils 10 untersucht, um strukturelle Fehler bzw. Defekte des Bauteils 10 zu erkennen. Danach, im Schritt 102, werden Fehlerinformationen, wie z.B. die Maßgröße des Defekts und/oder seine Position, bestimmt und zu einer Prozessoreinheit 31 übertragen. Gleichzeitig werden im Schritt 103 Informationen über die Position des Bauteils 10 und des Benutzers bestimmt und ebenfalls zur Prozessoreinheit 31 übertragen. Im Schritt 104 verarbeitet die Prozessoreinheit 31 die von der Fehlererkennungseinheit 20 und von der Positionsbestimmungseinheit 32 bestimmten Informationen. Hierbei werden die Fehler aufgrund beispielsweise der Maßgröße des Defekts kategorisiert. Im Schritt 105 erfolgt eine Integrierung der oben bestimmten Informationen in einem Bauteilbild B und, im Schritt 106, werden diese dem Benutzer angezeigt.

Die Ausführung der Erfindung ist nicht auf die oben beschriebenen Beispiele und hervorgehobenen Aspekte beschränkt, sondern ebenso in einer Vielzahl von Abwandlungen möglich, die im Rahmen fachgemäßen Handelns liegen.

Offenbart ist eine Anordnung zur optischen Fehlerüberprüfung von mindestens einem Bauteil, welche eine Fehlererkennungseinheit zur Erkennung eines strukturellen Fehlers des Bauteils sowie zur Bestimmung mindestens einer Fehlerinformation und ein zur Fehlererkennungseinheit gekoppeltes Mittel zur kontextabhängigen Einblendung der Fehlerinformation auf einem Bauteilbild in Echtzeit aufweist.

### Bezugszeichenliste

1 Anordnung
10 Bauteil
20 Fehlererkennungseinheit
30 Mittel zur kontextabhängigen Einblendung der Fehlerinformation auf einem Bauteilbild in Echtzeit
31 Prozessoreinheit
32 Positionsbestimmungseinheit
33 Referenzmarker
34 Aufnahmeeinheit
34' Kamera
35 Visualisierungseinheit
35' Transparentes Display
36 Synchronisierungseinheit
41 Fehlerinformationen
42 Mittel zur Ortsbestimmung des Fehlers
B Verarbeitetes Bild
F₁, F₂, F₃ Fehler

## Patentansprüche

1. Anordnung (1) zur optischen Fehlerüberprüfung von mindestens einem Bauteil (10) mit:
- einer Fehlererkennungseinheit (20) zur Erkennung eines strukturellen Fehlers (F₁, F₂, F₃) des Bauteils (10) und zur Bestimmung mindestens einer Fehlerinformation, und
- einem zur Fehlererkennungseinheit (20) gekoppelten Mittel (30) zur kontextabhängigen Einblendung der Fehlerinformation auf einem Bauteilbild (B) in Echtzeit,
**dadurch gekennzeichnet, dass** das Mittel (30) zur kontextabhängigen Einblendung der Fehlerinformation eine Positionsbestimmungseinheit (32) zur Bestimmung einer exakten Information über die Position des Bauteils (10) und über die Position des Benutzers, eine zur Fehlererkennungseinheit (20) und zur Positionsbestimmungseinheit (32) gekoppelte Prozessoreinheit (31) zur Verarbeitung der von der Fehlererkennungseinheit (20) und Positionsbestimmungseinheit (32) bestimmten Informationen und zur Integrierung der verarbeiteten Informationen im Bauteilbild (B) und eine zur Prozessoreinheit (31) gekoppelte Visualisierungseinheit (35) zum Anzeigen des Bauteilbildes (B) mit den integrierten Informationen aufweist.

2. Anordnung (1) nach Anspruch 1, wobei eine zur Prozessoreinheit (31) gekoppelte Aufnahmeeinheit (34) zur Aufnahme des Bauteilbildes (B) vorgesehen ist.

3. Anordnung (1) nach Anspruch 1 oder 2, wobei das Bauteilbild (B) einem Echtzeitbild des Bauteils (10) entspricht.

4. Anordnung (1) nach einem der vorhergehenden Ansprüche, wobei die Visualisierungseinheit (35) einen tragbaren Rechner oder eine tragbare Brille oder Kontaktlinsen oder einen tragbaren Bildschirm oder ein tragbares transparentes Display (35') aufweist.

5. Anordnung (1) nach einem der vorhergehenden Ansprüche, wobei die Fehlerinformation die Ortsbestimmung bzw. die Koordinaten (X₁,Y₁; X₂, Y₂) des strukturellen Fehlers aufweist (F₁, F₂, F₃).

6. Anordnung (1) nach einem der vorhergehenden Ansprüche, wobei die Fehlerinformation die Schwere des strukturellen Fehlers (F₁, F₂, F₃) aufweist.

7. Anordnung (1) nach einem der vorhergehenden Ansprüche, wobei die Positionsbestimmungseinheit (32) Referenzmarker (33) zur Berechnung der Position des Bauteils (10) und des Benutzers aufweist.

8. Anordnung (1) nach einem der vorhergehenden Ansprüche, wobei die Prozessoreinheit (31) eine Synchronisierungseinheit (36) aufweist, um die Bewegung der Visualisierungseinheit (35) bzw. die Blickrichtung der Visualisierungseinheit (35) mit dem angezeigten Bauteilbild (B) abzustimmen.

9. Anordnung (1) nach einem der vorhergehenden Ansprüche, wobei die Visualisierungseinheit (35) ein Mittel (42) zur Ortsbestimmung des strukturellen Fehlers (F₁, F₂, F₃) auf dem angezeigten Bauteilbild (B) aufweist.

10. Verfahren (100) zur optischen Fehlerüberprüfung von einem Bauteil (10), mit den Schritten:
- Erkennen (101) eines strukturellen Fehlers (F₁, F₂, F₃) auf dem Bauteil (10) und das Bestimmen (102) mindestens einer Fehlerinformation durch eine Fehlererkennungseinheit (12), und
- kontextabhängiges Einblenden der Fehlerinformation auf einem Bauteilbild (B) in Echtzeit, wobei die kontextabhängige Einblendung der Fehlerinformation auf einem Bauteilbild (B) in Echtzeit, das Bestimmen einer exakten Information über die Position des Bauteils (10) und die Position des Benutzers durch eine Positionsbestimmungseinheit (32), das Verarbeiten der Fehlerinformation und der Information über die Position des Bauteils (10) und die Position des Benutzers und das Integrieren der verarbeiteten Informationen in einem Bauteilbild (B) durch eine Prozessoreinheit (31), und das Anzeigen des Bauteilbildes (B) mit den integrierten Informationen in Echtzeit durch eine Visualisierungseinheit (35) durchgeführt wird.

11. Verfahren (100) nach Anspruch 10, wobei das Bauteilbild (B) in Echtzeit aufgenommen wird.

12. Verfahren (100) nach Anspruch 10 oder 11, wobei sich das angezeigte Bauteilbild (B) entsprechend der Bewegung der Visualisierungseinheit (35) bzw. der Blickrichtung der Visualisierungseinheit (35) mitbewegt.

13. Verfahren (100) nach einem der Ansprüche 10 bis 12, wobei die Verarbeitung der Fehlerinformation das Kategorisieren des strukturellen Fehlers (F₁, F₂, F₃) und gegebenenfalls das Einleiten von Gegenmaßnahmen aufweist.

## Claims

1. Arrangement (1) for optical defect inspection of at least one component (10) with:
- a defect detection unit (20) for detecting a structural defect (F1, F2, F3) of the component (10) and for determining at least one piece of defect information, and
- a means (30) coupled to the defect detection unit (20) for context-dependent insertion of the defect information on a component image (B) in real time,
wherein the means (30) for context-dependent insertion of the error information comprises a position determination unit (32) for determining exact information about the position of the component (10) and about the position of the user, a processor unit (31) coupled to the error detection unit (20) and to the position determination unit (32) for processing the information determined by the error detection unit (20) and position determination unit (32) and for integrating the processed information in the component image (B), and a visualization unit (35) coupled to the processor unit (31) for displaying the component image (B) with the integrated information.

2. Arrangement (1) according to one of the claims 1,
wherein a receiving unit (34) coupled to the processor unit (31) is provided for receiving the component image (B).

3. Arrangement (1) according to claim 1 or 2,
wherein the component image (B) corresponds to a real-time image of the component (10).

4. Arrangement (1) according to one of the preceding claims,
wherein the visualization unit (35) comprises a portable computer or portable glasses or contact lenses or a portable screen or a portable transparent display (35').

5. Arrangement (1) according to one of the preceding claims,
wherein the error information comprises the location or the coordinates (X1, Y1; X2, Y2) of the structural error (F1, F2, F3).

6. Arrangement (1) according to any of the foregoing claims,
wherein the error information comprises the severity of the structural error (F1, F2, F3).

7. Arrangement (1) according to one of the preceding claims,
wherein the position determination unit (32) comprises reference markers (33) for calculating the position of the component (10) and the user.

8. Arrangement (1) according to one of the preceding claims,
wherein the processor unit (31) comprises a synchronizing unit (36) for matching the movement of the visualization unit (35) or the viewing direction of the visualization unit (35) with the displayed component image (B).

9. Arrangement (1) according to one of the preceding claims,
wherein the visualization unit (35) comprises a means (42) for determining the location of the structural error (F1, F2, F3) on the displayed component image (B).

10. Method (100) for optical defect inspection of a component (10), comprising the steps:
- detecting (101) a structural defect (F1, F2, F3) on the component (10) and determining (102) at least one defect information by a defect detection unit (12), and
- Context-sensitive real-time display of error information on a part image (B),
wherein the context-dependent superimposition of the error information on a component image (B) in real time, the determination of exact information about the position of the component (10) and the position of the user by a position determination unit (32), the processing of the error information and the information about the position of the component (10) and the position of the user and the integration of the processed information in a component image (B) by a processor unit (31), and the display of the component image (B) with the integrated information in real time by a visualization unit (35).

11. Method (100) according to claim 10,
wherein the component image (B) is recorded in real time.

12. Method (100) according to claim 10 or 11,
wherein the displayed component image (B) moves according to the movement of the visualization unit (35) or the viewing direction of the visualization unit (35).

13. Method (100) according to one of claims 10 to 12,
wherein the processing of the error information comprises categorizing the structural error (F1, F2, F3) and, if necessary, initiating countermeasures.

## Revendications

1. Arrangement (1) pour le contrôle optique des défauts d'au moins un composant (10) avec:
- une unité de détection des défauts (20) pour détecter un défaut structurel (F1, F2, F3) de l'élément (10) et pour déterminer au moins une information sur le défaut, et
- un moyen (30) couplé à l'unité de détection des défauts (20) pour l'insertion en temps réel, en fonction du contexte, des informations sur les défauts dans une image composante (B),
dans lequel le moyen (30) d'insertion des informations d'erreur en fonction du contexte comprend une unité de détermination de la position (32) pour déterminer des informations exactes sur la position du composant (10) et sur la position de l'utilisateur, comporte une unité de traitement (31) couplée à l'unité de détection d'erreurs (20) et à l'unité de détermination de position (32) pour traiter les informations déterminées par l'unité de détection d'erreurs (20) et l'unité de détermination de position (32) et pour intégrer les informations traitées dans l'image de composant (B), et une unité de visualisation (35) couplée à l'unité de traitement (31) pour afficher l'image de composant (B) avec les informations intégrées.

2. Arrangement (1) selon l'une des revendications 1,
dans laquelle une unité d'enregistrement (34) couplée à l'unité de traitement (31) est prévue pour l'enregistrement de l'image composante (B).

3. Arrangement (1) selon la revendication 1 ou 2,
dans lequel l'image du composant (B) correspond à une image en temps réel du composant (10).

4. Arrangement (1) selon l'une des revendications précédentes,
dans lequel l'unité de visualisation (35) comprend un ordinateur portable ou des lunettes portables ou des lentilles de contact ou un écran portable ou un affichage transparent portable (35').

5. Arrangement (1) selon l'une des revendications précédentes,
les informations sur l'erreur comprenant le lieu ou les coordonnées (X1, Y1 ; X2, Y2) de l'erreur structurelle (F1, F2, F3).

6. Arrangement (1) selon l'une des revendications précédentes,
les informations sur l'erreur comprenant la gravité de l'erreur structurelle (F1, F2, F3).

7. Arrangement (1) selon l'une des revendications précédentes,
dans lequel l'unité de détermination de la position (32) comprend des marqueurs de référence (33) pour le calcul de la position du composant (10) et de l'utilisateur.

8. Arrangement (1) selon l'une des revendications précédentes,
dans lequel l'unité de traitement (31) comprend une unité de synchronisation (36) pour faire correspondre le mouvement de l'unité de visualisation (35) ou la direction de visualisation de l'unité de visualisation (35) avec l'image composante affichée (B).

9. Arrangement (1) selon l'une des revendications précédentes,
dans laquelle l'unité de visualisation (35) comprend des moyens (42) pour déterminer l'emplacement de l'erreur structurelle (F1, F2, F3) sur l'image composante affichée (B).

10. Méthode (100) de contrôle optique des défauts d'un composant (10), comprenant les étapes suivantes
- détecter (101) un défaut structurel (F1, F2, F3) sur le composant (10) et déterminer (102) au moins une information de défaut par une unité de détection des défauts (12), et
- affichage en temps réel, en fonction du contexte, des informations sur les erreurs dans une image composante (B),
dans lequel la superposition en temps réel, en fonction du contexte, des informations d'erreur sur une image de composant (B), la détermination d'informations exactes sur la position du composant (10) et la position de l'utilisateur par une unité de détermination de position (32), le traitement des informations d'erreur et des informations sur la position du composant (10) et la position de l'utilisateur et l'intégration des informations traitées dans une image de composant (B) par une unité de traitement (31), et l'affichage en temps réel de l'image de composant (B) avec les informations intégrées par une unité de visualisation (35).

11. Méthode (100) selon la revendication 10,
dans laquelle l'image composante (B) est enregistrée en temps réel.

12. Méthode (100) selon la revendication 10 ou 11,
dans laquelle l'image composante affichée (B) se déplace également selon le mouvement de l'unité de visualisation (35) ou la direction de vue de l'unité de visualisation (35).

13. Méthode (100) selon l'une des revendications 10 à 12,
dans laquelle le traitement des informations sur les erreurs comprend la catégorisation de l'erreur structurelle (F1, F2, F3) et, si nécessaire, le déclenchement de contre-mesures.
